# FASCICULE DE BREVET EUROPEEN

(11) **EP 2 979 346 B1**
(45) Date de publication et mention de la délivrance du brevet: **21.11.2018**
(21) Numéro de dépôt: 14711756.8
(22) Date de dépôt: 21.03.2014
(51) Int. Cl.: F04D 29/66, H02K 1/18, F04D 29/26, F04D 29/64, F16F 15/121, H02K 7/14

(54) **PIÈCE DE DÉCOUPLAGE ENTRE UN MOTEUR ET SON SUPPORT, ET ASSEMBLAGE D'UN MOTEUR SUR SON SUPPORT INTÉGRANT UNE TELLE PIÈCE DE DÉCOUPLAGE**
TEIL ZUM ABKOPPELN UND ANBRINGEN EINES MOTORS SOWIE MONTAGE EINES MOTORS AUF DESSEN HALTERUNG MIT SOLCH EINEM DARIN EINGEBAUTEN TEIL ZUM ABKOPPELN
DECOUPLING PIECE BETWEEN A MOTOR AND ITS SUPORT, AND THE ASSEMBLY OF A MOTOR ON ITS SUPPORT INCORPORATING THE DECOUPLING PIECE

(30) Priorité: 26.03.2013 FR 1352692
(43) Date de publication de la demande: 03.02.2016
(73) Titulaire: Valeo Systemes Thermiques, 78321 Le Mesnil Saint Denis Cédex (FR)
(72) Inventeur: LE GOFF, Morgan, F-91360 Epinay Sur Orge (FR); NAJI, Saïd, F-78990 Elancourt (FR); VINCENT, Philippe, F-28230 Epernon (FR); CAPOULUN, Geoffroy, 78000 Versailles (FR); FARKH, Alain, F-78490 Montfort l'Amaury (FR)
(74) Mandataire: Metz, Gaëlle
(86) Numéro de dépôt international: PCT/EP2014/055688
(87) Numéro de publication internationale: WO 2014/154575

(56) Documents cités:
- US-A1- 2008 296 985
- US-A1- 2009 189 052
- US-A1- 2011 187 223

## Description

L'invention concerne principalement une pièce de découplage entre un moteur et son support.

L'invention porte également sur l'assemblage d'un moteur sur son support qui intègre une telle pièce de découplage.

Les systèmes de ventilation, chauffage et/ou climatisation de véhicule, notamment automobile, impliquent la propulsion d'un flux d'air par une roue de pulseur qui est entrainée par un moteur placé dans un support solidaire de la caisse du véhicule.

Pour limiter la transmission des vibrations du moteur, il est connu de prévoir des amortisseurs de vibrations, autrement dénommé moyens de découplage, réalisés en un matériau souple tel que du caoutchouc et situé entre le moteur et son support.

La publication WO 201200592 décrit un tel système dans lequel trois plots de découplage sont régulièrement répartis entre la bague interne du support moteur au niveau de laquelle le moteur est logé, et une paroi circulaire intermédiaire du support moteur.

Cependant, dans une telle configuration, et en particulier lorsque le moteur est en position horizontale, le fonctionnement du moteur peut entraîner la déformation des plots souples de découplage et le basculement du moteur vers l'avant, ce qui peut être néfaste pour les performances aérauliques du pulseur notamment en raison d'un contact possible avec une roue de pulseur.

La publication US 2008/0218009 prévoit un système de découplage disposé dans le moteur, autour d'une pièce centrale qui est reliée au support moteur en s'étendant coaxialement dans la partie centrale du noyau du stator. Ce système de découplage permet ainsi d'absorber les vibrations induites par le stator. Mais l'atténuation du bruit du moteur reste insuffisante.

La publication US 2011/0187223 décrit un moteur sans balais qui comporte une pièce de découplage entre le moteur et son support, ledit moteur comportant un noyau de stator dont une partie centrale est destinée à recevoir ladite pièce de découplage.

Dans ce contexte, la présente invention vise une pièce de découplage entre un moteur et son support permettant de réduire significativement les vibrations induites par le fonctionnement du moteur tout en évitant le déplacement du moteur, et en particulier son basculement en position horizontale.

A cet effet, la pièce de découplage selon la revendication 1 est proposée.

La pièce de découplage de l'invention peut également comporter les caractéristiques optionnelles suivantes considérées isolément ou selon toutes les combinaisons techniques possibles :
- les plots de découplage comportent chacun au moins un évidement axial.
- au moins un évidement axial est réalisé au niveau de la surface de contact entre les plots de découplage et l'anneau central de la pièce de liaison, en formant ainsi une discontinuité de surface de contact entre lesdits plots de découplage et l'anneau central de la pièce de liaison.
- les plots de découplage présentent une forme en H intégrant deux évidements traversants latéraux.
- la pièce de liaison rigide comporte trois branches régulièrement réparties circonférentiellement autour de l'anneau central, en formant trois espaces de logement de plots de découplage souple.
- la pièce de liaison rigide comporte quatre branches régulièrement réparties circonférentiellement autour de l'anneau central, qui forment quatre espaces de logement de plots de découplage souples.
- les plots de découplage sont en caoutchouc.
- les bords latéraux des pattes d'assemblage rigides sont repliés vers l'axe de rotation de l'arbre rotatif du rotor en venant en prise sur le plot de découplage concerné.
- chaque extrémité libre opposée de la pièce de liaison rigide comporte un logement de réception d'un premier et d'un second roulements destinés à être coaxialement disposés dans la partie centrale du noyau du stator en étant en contact rotatif avec l'arbre rotatif du rotor.
- la pièce de découplage est réalisée par surmoulage des plots de découplage entre la pièce de liaison rigide de la pièce de découplage, et les pattes d'assemblage solidaires de la pièce support.

L'invention porte également sur un assemblage d'un moteur sur son support qui est caractérisé en ce qu'il comporte une pièce de découplage telle que précédemment décrite, qui est emmanchée dans la partie centrale du noyau de stator en étant solidarisé au support moteur, les extrémités radiales des branches de la pièce de liaison rigide de la pièce de découplage étant en appui de contact contre la paroi interne du noyau du stator, tandis que les pattes d'assemblage des plots de découplage sont sensiblement à distance de ladite paroi interne du noyau du stator.

Avantageusement, le plan médian transversal de la pièce de découplage, qui s'étend coaxialement dans la partie centrale du noyau de stator, est aligné avec le centre de gravité du moteur.

D'autres caractéristiques et avantages de l'invention ressortiront clairement de la description qui en est donnée ci-dessous, à titre indicatif, et nullement limitatif, en référence aux figures annexées parmi lesquelles :
- la figure 1 est une représentation schématique en perspective de la pièce de découplage de l'invention selon une première variante qui est emmanchée dans la partie centrale du noyau du stator d'un moteur représenté partiellement,
- la figure 2 est une représentation schématique en plan de dessus de la pièce de découplage de l'invention selon la flèche II de la figure 1,
- la figure 3 est une représentation schématique en perspective de la pièce de découplage de la première variante représentée sur le support moteur et surmontée d'un roulement d'accompagnement de la rotation du rotor,
- la figure 4 est une représentation schématique en coupe selon la ligne IV-IV de la figure 3 sur laquelle le noyau de stator est illustré,
- la figure 5 est une représentation schématique de dessus de la pièce de découplage de l'invention selon une seconde variante de réalisation,
- la figure 6 est une représentation schématique de dessus de la pièce de découplage de l'invention selon une troisième variante de réalisation,
- la figure 7 est représentation schématique en perspective de dessus de la pièce de découplage de l'invention selon une quatrième variante qui est représentée montée sur le support moteur, et
- la figure 8 est une représentation schématique de dessus de la pièce de découplage de l'invention selon une cinquième variante de réalisation.

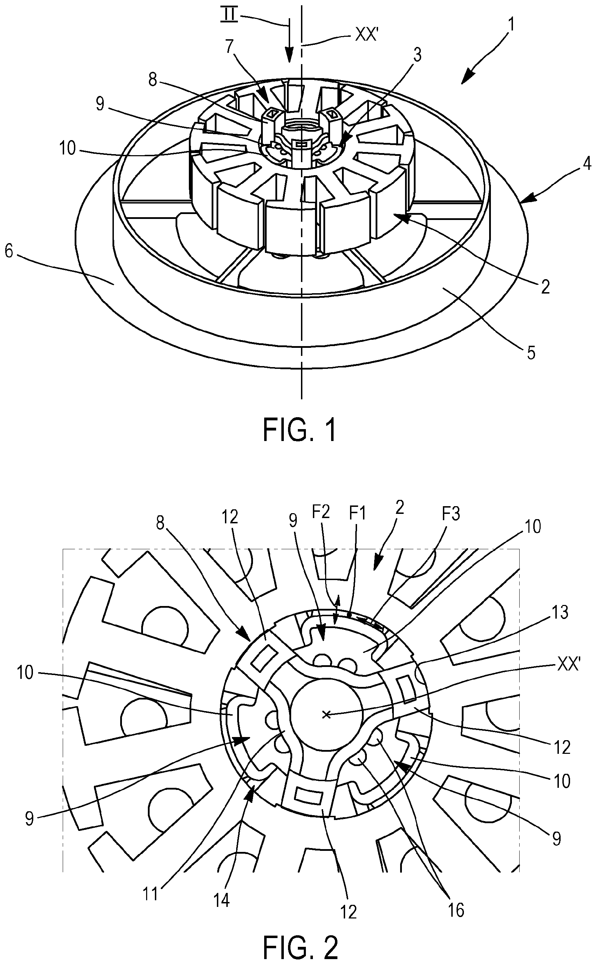

En référence à la figure 1, le moteur 1 représenté partiellement comporte un noyau de stator 2 dont la partie centrale 3 est destinée à recevoir la pièce de découplage de l'invention 7 montée coaxialement autour de l'arbre rotatif du rotor non représentée sur cette figure. Le noyau du stator 2 présente une certaine épaisseur de sorte que la partie centrale 3 du noyau de stator 2 s'étend axialement selon l'axe de rotation XX' de l'arbre rotatif du rotor.

Le support 4 du moteur 1 s'étend transversalement et à distance du noyau du stator 2 en présentant une partie en cuvette 5 formant réception du moteur 1, et une partie essentiellement plane 6 en forme de disque. Le support 4 est solidarisé à la caisse du véhicule.

La pièce de découplage de l'invention 7 est coaxialement emmanchée dans la partie centrale 3 du noyau du stator 2 et comporte une pièce de liaison rigide 8, des plots de découplage 9 et des pattes d'assemblages 10 solidaires du support moteur 4. Les plots de découplage 9 sont réalisés dans un matériau souple et élastique, par exemple du caoutchouc.

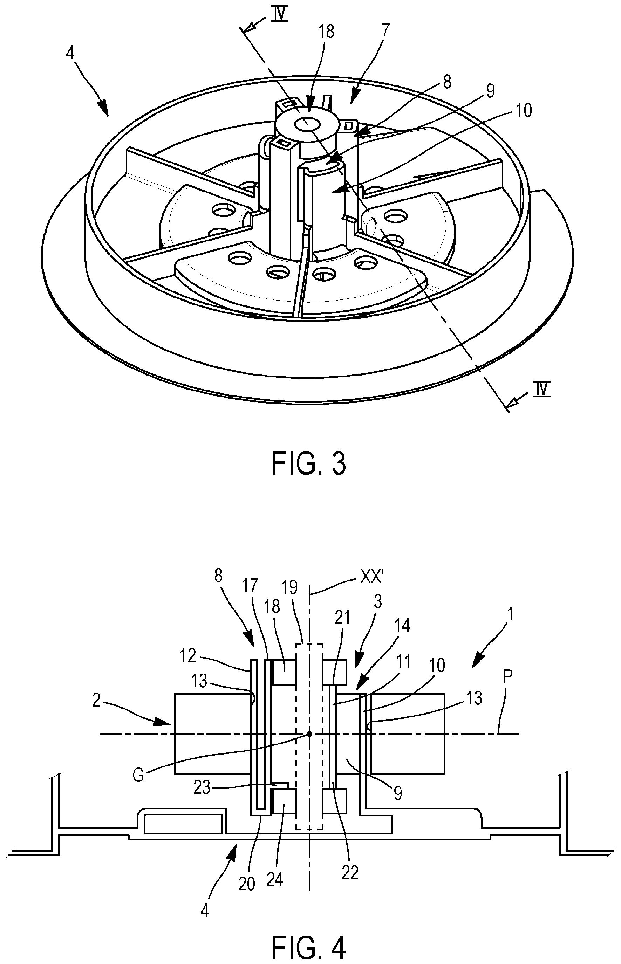

En référence aux figures 2 et 4, la pièce de liaison 8 comporte un anneau central coaxial 11 duquel s'étendent radialement trois branches 12 régulièrement réparties circonférentiellement, et dont les extrémités libres sont en appui de contact radial contre la paroi interne 13 du noyau du stator 2.

Chaque paire de branches adjacentes 12 forme un espace de logement 14 d'un plot de découplage 9 formant amortisseur de vibration, qui s'étend radialement depuis la face externe de l'anneau central 11 de la pièce de liaison 8 jusqu'à une patte d'assemblage 10 dont les bords latéraux sont repliés vers l'axe XX' en venant en prise sur l'isolateur de vibration 9 (figure 2).

En référence à la figure 4, chaque patte d'assemblage 10 s'étend axialement dans la partie centrale 3 du noyau du stator 2 jusqu'au support moteur 4 auquel elle est solidarisée. Par ailleurs, chaque patte d'assemblage 10 s'étend radialement à proximité de la face interne 13 du noyau du stator 2 sans être en appui de contact avec cette face interne 13. Cette distance entre la pièce de découplage 10 et le noyau du stator 2 permet d'autoriser les mouvements relatifs du noyau du stator 2 par rapport au support moteur 4 lors du fonctionnement du moteur.

Comme visible sur la figure 2, chaque plot de découplage 9 comporte deux évidements traversants axiaux 16 situés au niveau de la surface de contact entre le plot de découplage 9 et l'anneau central 11 de la pièce de liaison 8.

Ainsi, en référence à la figure 4, la pièce de découplage 7 s'étend axialement dans la partie centrale 3 du noyau du stator 2, les plots de découplage 9 présentent une hauteur qui coïncide avec la hauteur du noyau du stator 2. Ainsi, le plan médian transversal P de la pièce de découplage 7 est aligné avec le centre de gravité G du moteur 1, ce qui confère à la pièce de découplage 7 de l'invention des propriétés avantageuses qui seront décrites plus loin.

Plus précisément, si les plots de découplage 9 présentent chacun une longueur sensiblement identique à l'épaisseur du noyau du stator 2, la pièce de liaison 8 s'étend axialement de part et d'autre du noyau de stator 2. Comme visible sur les figures 3 et 4, les extrémités axiales libres supérieures 17 des branches 12 de la pièce de liaison 8 s'étendent à une certaine distance du noyau du stator 2 tandis que l'extrémité supérieure 21 de l'anneau central 11 s'étend à une moindre distance du noyau du stator 2 en formant une surface d'appui d'un premier roulement 18 d'entraînement en rotation de l'arbre rotatif du rotor 19. Le roulement 18 est ainsi en appui axial sur l'anneau central 11 et en appui radial contre les trois branches 12 de la pièce de liaison 8.

En référence à la figure 4, les extrémités axiales libres inférieures 20 des branches 12 de la pièce de liaison 8 s'étendent à une certaine distance du noyau du stator 2 tandis que l'extrémité inférieure 22 de l'anneau central 11 s'étend à une moindre distance du noyau du stator 2. Par ailleurs, l'extrémité inférieure 20 de chaque branche 12 de la pièce de liaison 8 comporte un décroché 23 situé à même distance du noyau de stator 2 que l'extrémité libre inférieure 22 de l'anneau central 11 en formant ainsi, avec l'extrémité libre inférieure 22 de l'anneau central 11, une surface d'appui d'un second roulement 24 d'entraînement en rotation de l'arbre rotatif du rotor 19. Le second roulement 24 est également en appui radial contre les extrémités inférieures 20 des trois branches 12 de la pièce de liaison 8.

Selon l'invention, la pièce de découplage 7, qui comporte la pièce de liaison 8, les plots de découplage 9 et les pièces d'assemblage 10 solidaires du support moteur 4, est réalisée par surmoulage.

Par ailleurs, la pièce de découplage de l'invention 7 est montée dans le noyau du stator 2 par emmanchement en force de la pièce de liaison rigide 8 contre la face interne 13 du noyau du stator 2, puis solidarisation des pièces d'assemblage 10 au support moteur 4.

La rigidité requise entre le stator et le rotor est obtenue par la pièce de l'invention de part les rigidités respectives de la pièce de liaison 8 qui est en appui de contact rigide avec le noyau du stator 2, et des pièces d'assemblage 10 solidaires de la pièce support 4. Il en résulte que la pièce de découplage de l'invention forme une liaison rigide. Par ailleurs, la co-axialité requise entre le stator et le rotor est également obtenue par le maintien fixe coaxial de la pièce de liaison 8 dans le noyau du stator 2 et la présence des roulements 18 et 24 positionnés fixement relativement à la pièce de liaison 8 par les moyens décrits précédemment.

Par ailleurs, contrairement à l'art antérieur présenté précédemment et notamment décrit dans la publication WO201200592, en rapportant les plots de découplage au sein même du moteur, le plan médian de découplage P et le centre de gravité G du moteur sont alignés, ce qui permet d'éviter tout déplacement du moteur en fonctionnement relativement au support moteur 4 du fait de la déformation des plots de découplage 9.

De plus, contrairement au système de la publication US2008/0218009 précédemment évoquée, le positionnement de la pièce de découplage de l'invention 7 entre le rotor et le noyau du stator 2 engendre le découplage concomitant de ces deux éléments, rotor et stator.

En outre, l'absorption des vibrations du moteur par les plots de découplage 9 répond à des conditions précises. En effet, la disposition axiale des plots de vibration 9 qui s'étendent dans la partie centrale 3 du noyau du stator 2 et la disposition radiale de ces plots de vibration 9 entre la pièce de liaison 6 et les pièces d'assemblage 10 permettent de limiter les déformations axiales F1 et radiales F2 (figure 2) engendrées par le fonctionnement du moteur.

En revanche, les évidements traversants longitudinaux 16 situés au niveau de la surface de contact entre les plots de découplage 9 et l'anneau central 11 de la pièce de liaison 8 limitent la surface de contact entre ces plots de vibration 9 et cet anneau central 11 dans une direction tangentielle F3 (figure 2), ce qui permet aux plots de découplage 9 d'absorber les vibrations tangentielles résultant des à-coups en rotation du stator relativement aux pièces fixes du système.

La configuration de la pièce de découplage de l'invention 7 permet ainsi d'isoler à la fois le stator et le rotor en absorbant un maximum de vibrations avant d'être transmises à la planche de bord dans le cas d'une application sur véhicule automobile et ce, sans conduire au basculement du moteur.

Il est également à noter que les surfaces de contact importantes dans les directions axiale F1 et radiale F2 des plots de découplage 9 avec les pièces rigides de la pièce de découplage de l'invention permettent également de limiter le basculement du moteur en cas de positionnement horizontal.

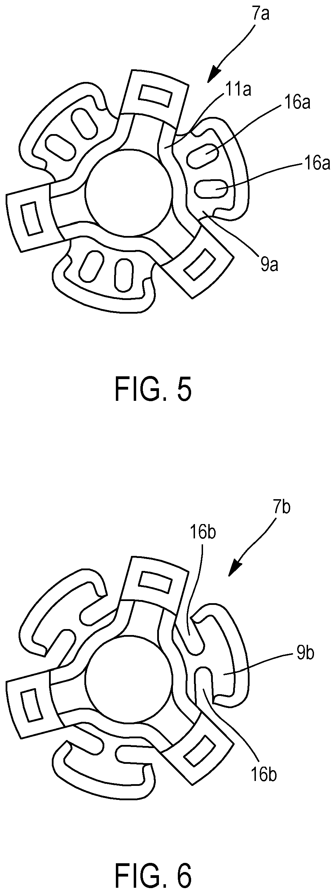

En référence aux figures 5 et 6, les plots de découplage de la pièce de découplage de l'invention peuvent présenter différentes configurations possibles.

Notamment, comme illustré sur la figure 5, les évidements traversants axiaux 16a des plots de découplage 9a de la pièce de découplage 7a peuvent être ménagés dans l'épaisseur de la pièce de découplage 7a et à distance de l'anneau central 11a de la pièce de découplage 7a.

En alternative avantageuse illustrée sur la figure 6, les plots de découplages 9b de la pièce de découplage 7b peuvent être dépourvus d'évidements traversants mais présenter une forme en H, intégrant ainsi des évidements traversants latéraux 16b qui autorisent les mouvements tangentiels relatifs entre le moteur et son support.

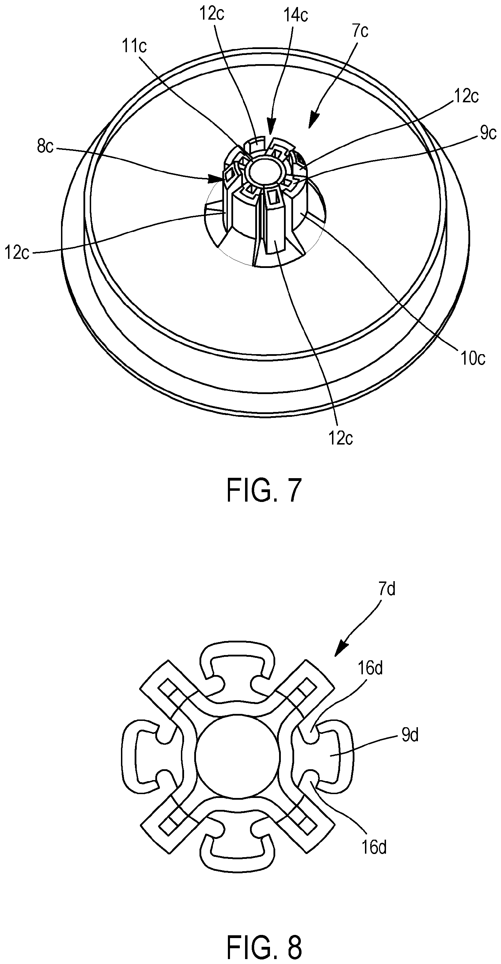

Par ailleurs, en référence à la figure 7, la pièce de découplage 7c de l'invention peut comporter une pièce de liaison 8c comportant quatre branches radiales 12c régulièrement réparties circonférentiellement autour de l'anneau central 11c, et délimitant ainsi quatre logements de réception 14c de quatre plots de découplage 9c surmontés radialement de leur pièce d'assemblage 10.

Enfin, comme illustré sur la figure 8, dans cette configuration à quatre branches, les plots de découplages 9d de la pièce de découplage 7d peuvent également présenter une forme en H intégrant les évidements traversants latéraux 16b qui autorisent les mouvements tangentiels relatifs entre le moteur et son support.

La géométrie de la pièce de découplage de l'invention ne se limite pas aux exemples de réalisation précédemment décrits, puisque cette pièce de découplage peut comporter au minimum deux branches de pièce de liaison, les plots de liaison pouvant être de toute configuration appropriée.

## Revendications

1. Pièce de découplage (7) destinée à être disposée entre un moteur (1) et son support (4), ledit moteur (1) comportant un rotor et un noyau de stator (2) dont une partie centrale (3) est destinée à recevoir ladite pièce de découplage (7), ladite pièce de découplage (7) comportant :
- une pièce de liaison rigide (8) destinée à être coaxialement disposée dans la partie centrale (3) du noyau du stator (2), ladite pièce de liaison rigide (8) comprenant un anneau central (11) de réception d'un arbre rotatif dudit rotor du moteur (1) duquel s'étendent au moins deux branches (12, 12c) qui forment au moins deux espaces de logement (14,14c) d'un plot de découplage souple (9, 9a, 9b, 9c, 9d), les extrémités libres desdites au moins deux branches (12, 12c) étant destinées à être en appui de contact contre une paroi interne (13) du noyau du stator (2) ;
- des pattes d'assemblage rigides (10, 10c) qui sont aptes à s'étendre chacune axialement dans la partie centrale (3) du noyau du stator (2) jusqu'au support (4) moteur, à proximité de la face interne (13) dudit noyau du stator (2) et destinées à être solidarisées au support moteur (4) ;
- des plots de découplage souples (9, 9a, 9b, 9c, 9d) qui s'étendent radialement depuis la face externe de l'anneau central (11) de la pièce de liaison rigide (8) au niveau de laquelle le plot de découplage (9, 9a,'9b, 9c, 9d) est en appui de contact, jusqu'à une patte d'assemblage rigide (10,10c).

2. Pièce de découplage selon la revendication 1, **caractérisée en ce que** les plots de découplage (9, 9a, 9b, 9c, 9d) comportent chacun au moins un évidement axial (16, 16a; 16b,16c,16d).

3. Pièce de découplage selon la revendication 2, **caractérisée en ce qu'**au moins un évidement axial (16, 16a, 16c) est réalisé au niveau de la surface de contact entre les plots de découplage (9, 9a, 9c) et l'anneau central (11, 11c) de la pièce de liaison (8,8c), en formant ainsi une discontinuité de surface de contact entre lesdits plots de découplage (9, 9a, 9c) et l'anneau central (11, 11c) de la pièce de liaison (8, 8c).

4. Pièce de découplage selon la revendication 1, **caractérisée en ce que** les plots de découplage (9) présentent une forme en H intégrant deux évidements traversants latéraux (16b, 16d).

5. Pièce de découplage selon l'une quelconque des revendications précédentes, **caractérisée en ce que** la pièce de liaison rigide (8) comporte trois branches (12) régulièrement réparties circonférentiellement autour de l'anneau central (11), en formant trois espaces de logement (14) de plots de découplage souple (9, 9b).

6. Pièce de découplage selon l'une quelconque des revendications 1 à 5, **caractérisée en ce que** la pièce de liaison rigide (8c) comporte quatre branches (12c) régulièrement réparties circonférentiellement autour de l'anneau central (11c), qui forment quatre espaces de logement (14c) de plots de découplage souples (9c, 9d).

7. Pièce de découplage selon l'une quelconque des revendications précédentes, **caractérisée en ce que** les plots de découplage (9, 9a, 9b, 9c, 9d) sont en caoutchouc.

8. Pièce de découplage selon l'une quelconque des revendications précédentes, **caractérisée en ce que** les bords latéraux des pattes d'assemblage rigides (10, 10c) sont repliés vers l'axe de rotation (XX') de l'arbre rotatif du rotor (19) en venant en prise sur le plot de découplage concerné (9, 9a, 9b, 9c, 9d).

9. Pièce de découplage selon l'une quelconque des revendications précédentes, **caractérisée en ce que** chaque extrémité libre opposée (17, 20 ; 21, 22) de la pièce de liaison rigide (8) comporte un logement de réception d'un premier (18) et d'un second (24) roulements destinés à être coaxialement disposés dans la partie centrale (3) du noyau du stator (2) en étant en contact rotatif avec l'arbre rotatif du rotor (19).

10. Pièce de découplage selon l'une quelconque des revendications précédentes, **caractérisée en ce qu'**elle est réalisée par surmoulage des plots de découplage (9, 9a, 9b, 9c, 9d) entre la pièce de liaison rigide (8,8c) de la pièce de découplage (7, 7a, 7b, 7c, 7d), et les pattes d'assemblage (10, 10c) solidaires de la pièce support (4).

11. Assemblage d'un moteur sur son support, **caractérisé en ce qu'**il comporte une pièce de découplage (7, 7a, 7b, 7c, 7d) selon l'une quelconque des revendications 1 à 10, qui est emmanchée dans la partie centrale (3) du noyau de stator (2) en étant solidarisé au support moteur (4), les extrémités radiales des branches (12,12c) de la pièce de liaison rigide (8, 8c) de la pièce de découplage (7, 7a, 7b, 7c, 7d) étant en appui de contact contre la paroi interne (13) du noyau du stator (2), tandis que les pattes d'assemblage (10, 10c) des plots de découplage (9, 9a, 9b, 9c, 9d) sont sensiblement à distance de la dite paroi interne (13) du noyau du stator (2).

12. Assemblage selon la revendication 11, **caractérisée en ce que** le plan médian transversal (P) de la pièce de découplage (7, 7a, 7b, 7c, 7d) qui s'étend coaxialement dans la partie centrale (3) du noyau de stator (2), est aligné avec le centre de gravité (G) du moteur (1).

## Patentansprüche

1. Teil zum Abkoppeln (7), das dazu bestimmt ist, zwischen einem Motor (1) und seiner Halterung (4) angeordnet zu werden, wobei der Motor (1) einen Rotor und einen Statorkern (2) umfasst, von dem ein zentraler Bereich (3) dazu bestimmt ist, das Teil zum Abkoppeln (7) aufzunehmen, wobei das Teil zum Abkoppeln (7) umfasst:
- ein starres Verbindungsteil (8), das dazu bestimmt ist, koaxial in dem zentralen Bereich (3) des Kerns des Stators (2) angeordnet zu werden, wobei das starre Verbindungsteil (8) einen zentralen Ring (11) zur Aufnahme einer drehenden Welle des Rotors des Motors (1) umfasst, von dem aus sich mindestens zwei Schenkel (12, 12c) erstrecken, die mindestens zwei Aufnahmeräume (14,14c) zur Aufnahme eines flexiblen Abkopplungsklotzes (9, 9a, 9b, 9c, 9d) bilden, wobei die freien Enden der mindestens zwei Schenkel (12, 12c) dazu bestimmt sind, kontaktierend an einer Innenwand (13) des Kerns des Stators (2) anzuliegen;
- starre Verbindungslaschen (10, 10c), die geeignet sind, sich jeweils axial in dem zentralen Bereich (3) des Kerns des Stators (2) bis zur Motorhalterung (4), in der Nähe der Innenseite (13) des Kerns des Stators (2), zu erstrecken und dazu bestimmt sind, fest mit der Motorhalterung (4) verbunden zu werden;
- flexible Abkopplungsklötze (9, 9a, 9b, 9c, 9d), die sich radial von der Außenseite des zentralen Rings (11) des starren Verbindungsteils (8), an dem der Abkopplungsklotz (9, 9a, 9b, 9c, 9d) kontaktierend anliegt, bis zu einer starren Verbindungslasche (10,10c) erstrecken.

2. Teil zum Abkoppeln nach Anspruch 1, **dadurch gekennzeichnet, dass** die Abkopplungsklötze (9, 9a, 9b, 9c, 9d) jeweils mindestens eine axiale Ausnehmung (16, 16a, 16b, 16c, 16d) umfassen.

3. Teil zum Abkoppeln nach Anspruch 2, **dadurch gekennzeichnet, dass** mindestens eine axiale Ausnehmung (16, 16a, 16c) an der Kontaktfläche zwischen den Abkopplungsklötzen (9, 9a, 9c) und dem zentralen Ring (11, 11c) des Verbindungsteils (8,8c) ausgeführt ist und so eine Kontaktflächendiskontinuität zwischen den Abkopplungsklötzen (9, 9a, 9c) und dem zentralen Ring (11, 11c) des Verbindungsteils (8, 8c) bildet.

4. Teil zum Abkoppeln nach Anspruch 1, **dadurch gekennzeichnet, dass** die Abkopplungsklötze (9) die Form eines H aufweisen, das zwei seitliche durchgehende Ausnehmungen (16b, 16d) beinhaltet.

5. Teil zum Abkoppeln nach einem der vorhergehenden Ansprüche, **dadurch gekennzeichnet, dass** das starre Verbindungsteil (8) drei Schenkel (12) umfasst, die umfänglich regelmäßig um den zentralen Ring (11) verteilt sind und drei Aufnahmeräume (14) zur Aufnahme von flexiblen Abkopplungsklötzen (9, 9b) bilden.

6. Teil zum Abkoppeln nach einem der Ansprüche 1 bis 5, **dadurch gekennzeichnet, dass** das starre Verbindungsteil (8c) vier Schenkel (12c) umfasst, die umfänglich regelmäßig um den zentralen Ring (11c) verteilt sind und vier Aufnahmeräume (14c) zur Aufnahme von flexiblen Abkopplungsklötzen (9c, 9d) bilden.

7. Teil zum Abkoppeln nach einem der vorhergehenden Ansprüche, **dadurch gekennzeichnet, dass** die Abkopplungsklötze (9, 9a, 9b, 9c, 9d) aus Kautschuk sind.

8. Teil zum Abkoppeln nach einem der vorhergehenden Ansprüche, **dadurch gekennzeichnet, dass** die seitlichen Ränder der starren Verbindungslaschen (10, 10c) zur Drehachse (XX') der drehenden Welle des Rotors (19) hin gebogen sind und mit dem betreffenden Abkopplungsklotz (9, 9a, 9b, 9c, 9d) in Eingriff kommen.

9. Teil zum Abkoppeln nach einem der vorhergehenden Ansprüche, **dadurch gekennzeichnet, dass** jedes entgegengesetzte freie Ende (17, 20; 21, 22) des starren Verbindungsteils (8) einen Aufnahmesitz zur Aufnahme eines ersten (18) und eines zweiten (24) Wälzlagers umfasst, die dazu bestimmt sind, koaxial in dem zentralen Bereich (3) des Kerns des Stators (2) angeordnet zu werden und dabei in Drehkontakt mit der drehenden Welle des Rotors (19) zu sein.

10. Teil zum Abkoppeln nach einem der vorhergehenden Ansprüche, **dadurch gekennzeichnet, dass** es durch Anformen der Entkopplungsklötze (9, 9a, 9b, 9c, 9d) zwischen dem starren Verbindungsteil (8, 8c) des Teils zum Abkoppeln (7, 7a, 7b, 7c, 7d) und den fest mit dem Halterungsteil (4) verbundenen Verbindungslaschen (10, 10c) ausgeführt ist.

11. Montage eines Motors auf seiner Halterung, **dadurch gekennzeichnet, dass** sie ein Teil zum Abkoppeln (7, 7a, 7b, 7c, 7d) nach einem der Ansprüche 1 bis 10 umfasst, das in den zentralen Bereich (3) des Statorkerns (2) gesteckt ist und dabei fest mit der Motorhalterung (4) verbunden ist, wobei die radialen Enden der Schenkel (12, 12c) des starren Verbindungsteils (8, 8c) des Teils zum Abkoppeln (7, 7a, 7b, 7c, 7d) kontaktierend an der Innenwand (13) des Kerns des Stators (2) anliegen, während die Verbindungslaschen (10, 10c) der Abkopplungsklötze (9, 9a, 9b, 9c, 9d) im Wesentlichen von der Innenwand (13) des Kerns des Stators (2) beabstandet sind.

12. Montage nach Anspruch 11, **dadurch gekennzeichnet, dass** die Quermittelebene (P) des Teils zum Abkoppeln (7, 7a, 7b, 7c, 7d), das sich koaxial im zentralen Bereich (3) des Statorkerns (2) erstreckt, mit dem Schwerpunkt (G) des Motors (1) fluchtet.

## Claims

1. Uncoupling part (7) designed to be arranged between a motor (1) and the mounting (4) thereof, said motor (1) comprising a rotor and a stator core (2), a central part (3) thereof being designed to receive said uncoupling part (7), said uncoupling part (7) comprising
- a rigid connecting part (8) which is designed to be coaxially arranged in the central part (3) of the core of the stator (2), said rigid connecting part (8) comprising a central ring (11) for receiving a rotating shaft of said rotor of the motor (1), at least two arms (12, 12c) extending therefrom and forming at least two spaces for housing (14, 14c) a flexible uncoupling pad (9, 9a, 9b, 9c, 9d), the free ends of said at least two arms (12, 12c) being designed to bear against an inner wall (13) of the core of the stator (2);
- rigid assembly tabs (10, 10c) which are capable of each extending axially into the central part (3) of the core of the stator (2) as far as the motor mounting (4), in the vicinity of the inner face (13) of said core of the stator (2) and designed to be fixed to the motor mounting (4) ;
- flexible uncoupling pads (9, 9a, 9b, 9c, 9d) extending radially from the outer face of the central ring (11) of the rigid connecting part (8), the uncoupling pad (9, 9a, 9b, 9c, 9d) bearing in the region thereof, as far as a rigid assembly tab (10, 10c).

2. Uncoupling part according to Claim 1, **characterized in that** the uncoupling pads (9, 9a, 9b, 9c, 9d) each comprise at least one axial recess (16, 16a, 16b, 16c, 16d).

3. Uncoupling part according to Claim 2, **characterized in that** at least one axial recess (16, 16a, 16c) is produced in the region of the contact surface between the uncoupling pads (9, 9a, 9c) and the central ring (11, 11c) of the connecting part (8, 8c), thus forming a discontinuity of the contact surface between said uncoupling pads (9, 9a, 9c) and the central ring (11, 11c) of the connecting part (8, 8c).

4. Uncoupling part according to Claim 1, **characterized in that** the uncoupling pads (9) are H-shaped, incorporating two lateral through-recesses (16b, 16d).

5. Uncoupling part according to one of the preceding claims, **characterized in that** the rigid connecting part (8) comprises three arms (12) regularly distributed circumferentially about the central ring (11), forming three spaces for housing (14) flexible uncoupling pads (9, 9b).

6. Uncoupling part according to any one of Claims 1 to 5, **characterized in that** the rigid connecting part (8c) comprises four arms (12c) which are regularly distributed circumferentially about the central ring (11c) and which form four spaces for housing (14c) flexible uncoupling pads (9c, 9d).

7. Uncoupling part according to any one of the preceding claims, **characterized in that** the uncoupling pads (9, 9a, 9b, 9c, 9d) are made of rubber.

8. Uncoupling part according to any one of the preceding claims, **characterized in that** the lateral edges of the rigid assembly tabs (10, 10c) are folded back toward the axis of rotation (XX') of the rotating shaft of the rotor (19), coming into engagement with the relevant uncoupling pad (9, 9a, 9b, 9c, 9d).

9. Uncoupling part according to any one of the preceding claims, **characterized in that** each opposing free end (17, 20; 21, 22) of the rigid connecting part (8) comprises a housing for receiving a first (18) and a second (24) bearing designed to be coaxially arranged in the central part (3) of the core of the stator (2), by being in rotational contact with the rotating shaft of the rotor (19).

10. Uncoupling part according to any one of the preceding claims, **characterized in that** it is produced by overmolding uncoupling pads (9, 9a, 9b, 9c, 9d) between the rigid connecting part (8, 8c) of the uncoupling part (7, 7a, 7b, 7c, 7d) and the assembly tabs (10, 10c) fixed to the mounting part (4).

11. Assembly of a motor on the mounting thereof, **characterized in that** it comprises a uncoupling part (7, 7a, 7b, 7c, 7d) according to any one of Claims 1 to 10, which is fitted into the central part (3) of the stator core (2) by being fixed to the motor mounting (4), the radial ends of the arms (12, 12c) of the rigid connecting part (8, 8c) of the uncoupling part (7, 7a, 7b, 7c, 7d) bearing against the inner wall (13) of the core of the stator (2), whilst the assembly tabs (10, 10c) of the uncoupling pads (9, 9a, 9b, 9c, 9d) are substantially remote from said inner wall (13) of the core of the stator (2).

12. Assembly according to Claim 11, **characterized in that** the transverse median plane (P) of the uncoupling part (7, 7a, 7b, 7c, 7d) which extends coaxially in the central part (3) of the stator core (2) is aligned with the center of gravity (G) of the motor (1).
